# EUROPÄISCHE PATENTANMELDUNG

(11) **EP 3 628 995 A1**
(43) Veröffentlichungstag der Anmeldung: **01.04.2020**
(21) Anmeldenummer: 19197026.8
(22) Anmeldetag: 12.09.2019
(51) Int. Cl.: G01M 11/02, G01N 21/88, G01N 21/89, G01N 21/93, H04N 17/02

(54) **KALIBRIERVORLAGE UND KALIBRIERVERFAHREN ZUM GEOMETRISCHEN KALIBRIEREN EINER VIELZAHL VON KAMERAS EINES KAMERA-ARRAYS**

(30) Priorität: 26.09.2018 DE 102018123717
(71) Anmelder: Göpel electronic GmbH, 07745 Jena (DE)
(72) Erfinder: FORWERK, Erik, 99444 Blankenhain (DE); RICHTER, Johannes, 07749 Jena (DE); SCHAMBACH, Jörg, 07639 Bad Klosterlausnitz (DE); SENFTLEBEN, Holger, 07774 Dornburg-Camburg (DE)
(74) Vertreter: Oehmke, Volker

(57) **Zusammenfassung**

Die Erfindung betrifft eine Kalibriervorlage (1) und ein Kalibrierverfahren zum geometrischen Kalibrieren einer Vielzahl von Kameras (8.1) mit entozentrischen Objektiven (8.2) in einem Kamera-Array (8), insbesondere in optischen Inspektionsvorrichtungen zum automatischen Prüfen von Objekten.

Aufgabe der Erfindung ist es, eine Vorrichtung und ein Verfahren zum Kalibrieren einer Vielzahl von in einem Kamera-Array (8) angeordneten Kameras (8.1) mit entozentrischen Objektiven (8.2) vorzuschlagen, bei dem die Kalibrierung unabhängig von Merkmalen eines realen Prüfobjekts und in mehr als einer Ebene durchführbar ist. Erfindungsgemäß wird die Aufgabe gelöst durch eine Kalibriervorlage (1) zum geometrischen Kalibrieren einer Vielzahl von Kameras (8.1) mit entozentrischen Objektiven (8.2). Die Kalibriervorlage (1) enthält eine Trägerplatte (2) mit einer ebenen Oberfläche (3), auf der eine zweidimensionale Struktur (4) und punktdefinierende Objekte (5) verteilt angeordnet sind. Jedes der punktdefinierenden Objekte (5) weist eine lokale Umgebung (5.1) auf. In der lokalen Umgebung (5.1) weist die zweidimensionale Struktur (4) ein charakteristisches Muster auf, das für jedes punktdefinierende Objekt (5) unterschiedlich ausgeführt ist.

## Beschreibung

Die Erfindung betrifft eine Kalibriervorlage und ein Kalibrierverfahren zum geometrischen Kalibrieren einer Vielzahl von Kameras mit entozentrischen Objektiven in einem Kamera-Array, insbesondere in optischen Inspektionsvorrichtungen zum automatischen Prüfen von Objekten.

In optischen Inspektionsvorrichtungen zum automatischen Prüfen von Objekten werden oft Kameras verwendet, deren Bilderfassungsbereich kleiner ist als der gesamte Prüfbereich der Inspektionsvorrichtung. Eine Bilderfassungseinheit besteht dann typischerweise aus mindestens einer dieser Kameras mit senkrecht zum Prüfbereich ausgerichteter Abbildungsoptik und einer entsprechenden Beleuchtungseinrichtung. Zur Erfassung des gesamten Prüfbereichs wird die Kamera mit Hilfe von X-Y-Achsen sequenziell über den Prüfbereich bewegt. Um reproduzierbare und systemübergreifend vergleichbare Bilder zu erzeugen, ist es erforderlich und üblich, die eingesetzten Kameras im Zusammenspiel mit den Beleuchtungseinrichtungen bezüglich der Helligkeit, Homogenität, Farbwiedergabe und auch der physikalischen Auflösung zu kalibrieren.

In anderen Ausführungen von Inspektionsvorrichtungen zum automatischen optischen Prüfen von Objekten werden Kamera-Arrays aus mehreren Kameras und Beleuchtungseinrichtungen verwendet. Beispiele dafür sind aus der Offenlegungsschrift DE 10 2010 020 824 A1 oder der Gebrauchsmusterschrift DE 20 2008 004 430 U1 bekannt. Jede der Kameras bildet nur einen Teil des Prüfbereichs ab, wobei sich in der Regel die Bilderfassungsbereiche von benachbarten Kameras überlappen. Die Einzelbilder der Kameras werden mittels Bildverarbeitungssoftware in geeigneter Weise zusammengeführt. Durch das Kamera-Array ist es möglich, gleichzeitig den gesamten Prüfbereich der Inspektionsvorrichtung zu erfassen. Auch hierzu ist es erforderlich, dass die eingesetzten Kameras und Beleuchtungseinrichtungen bezüglich der Helligkeit, Homogenität, Farbwiedergabe und auch der physikalischen Auflösung kalibriert werden, um mit dem Kamera-Array reproduzierbare und systemübergreifend vergleichbare Bilder zu erzeugen.

Das Zusammenführen der Bilderfassungsbereiche von Kameras eines Kamera-Arrays erfolgt durch Bildverarbeitungsverfahren wie z. B. Stitching oder Mosaicing. Beim Stitching oder Mosaicing werden die lokalen Kamera-Koordinatensysteme mittels geometrischer Transformation in ein gemeinsames globales Koordinatensystem überführt. Meist wird dazu ein lokales Kamera-Koordinatensystem einer der Kameras des Kamera-Arrays als Bezugssystem ausgewählt, dem die anderen Kamera-Koordinatensysteme überlagert oder einer Vorschrift folgend überblendet werden.

Um die Transformationen durchführen zu können, muss ein Bilderfassungsbereich ausreichende Überlappungen zu den jeweilig benachbarten Bilderfassungsbereichen aufweisen. Weiterhin müssen in den Überlappungen geeignete Merkmale vorhanden sein, aus denen sich eine Mindestmenge an korrespondierenden Punkten extrahieren lässt, die den beiden benachbarten Bilderfassungsbereichen zugeordnet werden können. Anhand der korrespondierenden Punkte kann eine Transformationsmatrix berechnet werden. Hierbei muss, unter Anwendung verschiedener Verfahren, ein Gleichungssystem gelöst werden. Das Gleichungssystem kann z. B. numerisch, mit einem Algorithmus wie dem Gauß-Jordan-Verfahren gelöst werden. Bei einer hohen Anzahl korrespondierender Punkte ist das Gleichungssystem meist überbestimmt. Deshalb wird häufig ein Näherungsverfahren, wie z. B. der RANSAC-Algorithmus, verwendet.

Sind die korrespondierenden Punkte nicht in ausreichender Menge oder Deutlichkeit vorhanden, kann es bei der Zusammenführung der Bilderfassungsbereiche zu Fehlern kommen. Die Erfüllung der ursprünglichen Aufgabe von automatischen Inspektionsvorrichtungen, auch kleinste Abweichungen vom Sollzustand zu detektieren, ist dadurch nicht gewährleistet. Es kann dann sehr leicht zum Auftreten von Pseudofehlern oder zu nicht erkannten Fehlern kommen.

Aus der Patentschrift US 8,388,204 B2 ist eine Vorrichtung zur optischen Inspektion bekannt, bei der die Bestimmung der korrespondierenden Punkte zur Berechnung der Transformationsmatrizen unmittelbar an den aufgenommenen Einzelbildern und während des Inspektionsprozesses erfolgt. Das hat den Nachteil, dass sich der Inspektionsprozess um die Zeit verzögert, die der Algorithmus zur Berechung der Transformationsmatrizen benötigt. Die Verzögerung kommt besonders bei Kamera-Arrays zum Tragen, die sich aus einer Vielzahl hochauflösender Kameras zusammensetzen.

Falls das Prüfobjekt keine ausreichenden Merkmale zum Bereitstellen korrespondierender Punkte aufweist, können auch geeignete Kalibriermarken auf dem Prüfobjekt vorgesehen werden. Beispiele für geeignete Kalibriermarken und Kalibrieralgorithmen sind z. B. in den Offenlegungsschriften DE 103 32 161 A1, DE 10 2007 044 762 A1 oder DE 10 2014 102 634 A1 offenbart. Den in den genannten Schriften offenbarten Kalibriermarken und Kalibrieralgorithmen ist gemeinsam, dass diese zur Kalibrierung von einzelnen Kameras und nicht zum Kalibrieren eines Kamera-Arrays mit einer Vielzahl von Kameras ausgelegt sind.

Aus der Notwendigkeit der Überlappung zwischen Bilderfassungsbereichen benachbarter Kameras werden für die Abbildungsoptiken bevorzugt entozentrische Objektive eingesetzt. Entsprechend der zentralperspektivischen Abbildung solcher entozentrischen Objektive sind die auf der Basis von korrespondierenden Punkten berechneten Transformationsmatrizen immer nur in der Objektebene gültig, in der auch die Kalibrierung durchgeführt wurde. Das bedeutet, dass ein aus einzelnen Bilderfassungsbereichen zusammengeführter Prüfbereich die Strukturen des Prüfobjekts nur in der Ebene, in der die Kalibrierung des Kamera-Arrays erfolgt ist, originalgetreu erfasst, während in allen anderen Ebenen eine originalgetreue Erfassung nicht möglich ist.

Bei einem in der US 2003/0025788 A1 offenbarten handgeführten System zur dreidimensionalen Erfassung von Objekten werden die Objekte mit einer ersten Kamera aufgenommen, wobei gleichzeitig mit mindestens einer weiteren Kamera feste Strukturen mit bekannter Lage und Abmessung in der Umgebung des Objektes erfasst werden. Die Bilderfassungsbereiche der ersten und der weiteren Kamera weisen keine Gemeinsamkeiten auf. Sie stehen zueinander in einer festen physikalischen Beziehung, sodass anhand der mit der weiteren Kamera erfassten festen Strukturen die Lage der ersten Kamera im Raum jederzeit ermittelt werden kann. Zum Kalibrieren der Bilderfassungsbereiche der Kameras wird eine Kalibriervorlage verwendet, von der beide Kameras wenigstens einen Teil erfassen. Die Kalibriervorlage weist geometrische Strukturen und zusätzlich eindeutige Marken auf. Anhand der Lage der geometrischen Strukturen und der Marken kann die Lage der Kamerakoordinatensysteme und die Ausrichtung der beiden Bilderfassungsbereiche der Kameras zueinander bestimmt werden. Ein Nachteil dieser Lösung ist, dass die geometrische Struktur der Kalibriervorlage bekannt sein muss. Eine automatische Kalibrierung wird dann zumindest mit dem Aufwand verbunden sein, die geometrischen Strukturen den Mitteln der digitalen Bildverarbeitung bekannt zu machen.

Aus dem Tagungsband der SERA 2017 ist die Veröffentlichung "Image Mosaicking for Oversized Documents with a Multi-Camera Rig" bekannt. Dort ist ein Kamera-Array zur Erfassung von Bildern übergroßer Dokumente beschrieben. Die Bilderfassungsbereiche der einzelnen Kameras des Arrays werden mittels Mosaicking-Verfahren überlagert und zu einem Gesamtbild zusammengefügt. Zuvor wird das Kamera-Array in zwei Schritten kalibriert. In einem ersten Schritt werden die lokalen Koordinatensysteme der Kameras perspektivisch in ein gemeinsames globales Koordinatensystem transformiert. Die Parameter für die Transformation werden anhand einer zumindest teilweise von jeder Kamera erfassten ersten Kalibriervorlage ermittelt. Die erste Kalibriervorlage ist ein Schachbrettmuster mit einzelnen Punktmarken, die so angeordnet sind, dass in jedem Bilderfassungsbereich jeweils eine Punktmarke zu finden ist. Die Punktmarken werden als Bezugspunkte für die Transformation der Bilderfassungsbereiche verwendet. Die transformierten Bilderfassungsbereiche werden in ein virtuelles Bild projiziert. In einem zweiten Schritt werden anhand einer zweiten, stark gemusterten Kalibriervorlage verbliebene Verzerrungen beseitigt. Dazu werden im virtuellen Bild in den überlappenden Randbereichen benachbarter Einzelbilder markante Bildmerkmale gesucht, die mit Mitteln der digitalen Bildverarbeitung zueinander ausgerichtet werden können. Nachteilig ist, das zum Kalibrieren zwei Kalibriervorlagen erforderlich sind.

Aufgabe der Erfindung ist es, eine Vorrichtung und ein Verfahren zum Kalibrieren einer Vielzahl von in einem Array angeordneten Kameras mit entozentrischen Objektiven vorzuschlagen, bei dem die Kalibrierung unabhängig von Merkmalen eines realen Prüfobjekts und in mehr als einer Ebene durchführbar ist.

Erfindungsgemäß wird die Aufgabe gelöst durch eine Kalibriervorlage zum geometrischen Kalibrieren einer Vielzahl von Kameras mit entozentrischen Objektiven. Die Kalibriervorlage enthält eine Trägerplatte mit einer ebenen Oberfläche, auf der eine zweidimensionale Struktur und zufällig über die Oberfläche verteilte punktdefinierende Objekte angeordnet sind. Jedes der punktdefinierenden Objekte weist eine lokale Umgebung auf. In der lokalen Umgebung weist die zweidimensionale Struktur ein charakteristisches Muster auf, das für jedes punktdefinierende Objekt unterschiedlich ausgeführt ist.

Vorzugsweise sind die Vielzahl von Kameras in einem Array angeordnet.

In einer Variante sind die punktdefinierenden Objekte in einem Raster über die Oberfläche verteilt angeordnet.

Vorteilhaft ist die lokale Umgebung symmetrisch um das punktdefinierende Objekt angeordnet.

In einer Ausführung ist die zweidimensionale Struktur ein Grauwertrauschen.

In einer anderen Ausführung ist die zweidimensionale Struktur eine Anordnung unterschiedlich gefärbter Quadrate.

In einer weiteren Ausführung ist die zweidimensionale Struktur eine Anordnung aus einer Vielzahl von schwarz umrandeten und unterschiedlich gefärbten Teilflächen.

Die Aufgabe wird weiterhin gelöst durch ein Kalibrierverfahren zum geometrischen Kalibrieren einer Vielzahl von Kameras mit entozentrischen Objektiven mittels einer erfindungsgemäßen Kalibriervorlage, mit den Verfahrensschritten:
a) Positionieren der Kalibriervorlage in einer der Vielzahl von Kameras in z-Richtung nachgeordneten x-y-Ebene,
b) Auffinden von punktdefinierenden Objekten in Bilderfassungsbereichen zweier benachbarter Kameras,
c) Extrahieren von punktdefinierenden Objekten, die in Überschneidungen der Bilderfassungsbereiche aufgefunden werden,
d) Identifizieren von korrespondierenden punktdefinierenden Objekten, die in den Überschneidungen den gleichen Punkt abbilden,
e) Berechnen und Hinterlegen einer Transformationsmatrix zum Transformieren von Kamera-Koordinatensystemen der benachbarten Kameras anhand der korrespondierenden punktdefinierenden Objekte,
f) Wiederholen der Verfahrensschritte b) bis e), bis für alle benachbarten Kameras Transformationsmatrizen berechnet und hinterlegt sind,
g) Festlegen eines Ursprungs für eine Stapelreihenfolge beim Zusammenfassen der Bilderfassungsbereiche der Kameras zu einem Prüfbereich des Kamera-Arrays und für ein globales Koordinatensystem des Kamera-Arrays durch Auswählen einer Kamera und deren Kamera-Koordinatensystems und
h) Transformieren der Kamera-Koordinatensysteme in das globale Koordinatensystem entsprechend der Stapelreihenfolge, ausgehend vom Ursprung.

In einer möglichen Ausgestaltung ist in einem weiteren Verfahrensschritt eine x- und y-Ausdehnung im Prüfbereich des Kamera-Arrays kalibrierbar.

In einer Variante ist in einem weiteren Verfahrensschritt ein Farbeindruck im Prüfbereich des Kamera-Arrays kalibrierbar.

In einer weiteren Variante erfolgt die Kalibrierung unter Wiederholung der Verfahrensschritte a) bis h) in mehreren x-y-Ebenen mit jeweils anderen Abständen zwischen Kamera-Array und Kalibriervorlage.

Nachfolgend soll die Erfindung anhand von Ausführungsbeispielen näher erläutert werden. In den zugehörigen Zeichnungen zeigen
- Fig. 1:: einen prinzipiellen Aufbau einer Kalibriervorlage,
- Fig. 2:: eine prinzipielle Anordnung einer zweidimensionalen Struktur in einer ersten Ausführung,
- Fig. 3:: eine prinzipielle Anordnung einer zweidimensionalen Struktur in einer zweiten Ausführung,
- Fig. 4:: eine prinzipielle Anordnung einer zweidimensionalen Struktur in einer dritten Ausführung und
- Fig. 5:: einen prinzipiellen Aufbau einer Kalibriervorlage in einer weiteren Ausführung mit zusätzlichen Marken.

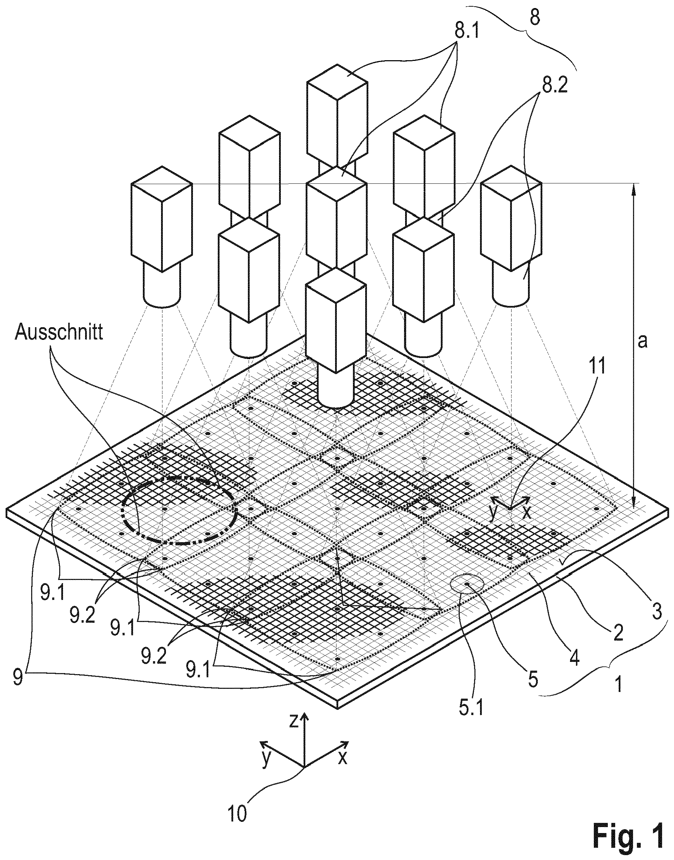

Eine Kalibriervorlage 1 zum geometrischen Kalibrieren einer Vielzahl von Kameras 8.1 mit entozentrischen Objektiven 8.2 in einem Kamera-Array 8 enthält, wie in Fig. 1 gezeigt, eine Trägerplatte 2 mit einer ebenen Oberfläche 3, auf der eine zweidimensionale Struktur 4 und punktdefinierende Objekte 5 angeordnet sind. Die punktdefinierenden Objekte 5 sind auf der Kalibriervorlage 1 verteilt angeordnet. Jedes der punktdefinierenden Objekte 5 weist eine lokale Umgebung 5.1 auf (in Fig. 1 beispielhaft nur an einem der punktdefinierenden Objekte 5 gezeigt), die das punktdefinierende Objekt 5 symmetrisch umgibt.

Die punktdefinierenden Objekte 5 sind zweidimensional und weisen eine geometrisch bestimmte Form und eine scharfe äußere Begrenzung auf. Als punktdefinierende Objekte 5 können alle Objekte verwendet werden, die mit den Kameras 8.1 in einer ausreichenden Auflösung erfasst werden können und bei denen ausgehend von der äußeren Begrenzung ein Mittelpunkt bestimmt werden kann. Am besten eignen sich dafür symmetrische Flächen, deren Umrisse z. B. Kreise, Quadrate oder gleichseitige Dreiecke sind. Es können auch andere Umrissgeometrien für punktdefinierende Objekte 5 verwendet werden, wobei alle auf einer Kalibriervorlage 1 verwendeten punktdefinierenden Objekte 5 stets gleichartig ausgeführt sind.

Die lokale Umgebung 5.1 ist ein begrenzter Bereich, dessen Größe so gewählt ist, dass mindestens ein Teil der das punktdefinierende Objekt 5 unmittelbar umgebenden zweidimensionalen Struktur 4 erfasst werden kann. Die zweidimensionale Struktur 4 innerhalb der lokalen Umgebung 5.1 bildet ein charakteristisches Muster 4. 1 (in Fig. 1 nicht gezeigt) für das punktdefinierende Objekt 5 aus, anhand dessen es auf der Kalibriervorlage 1 eindeutig identifiziert werden kann.

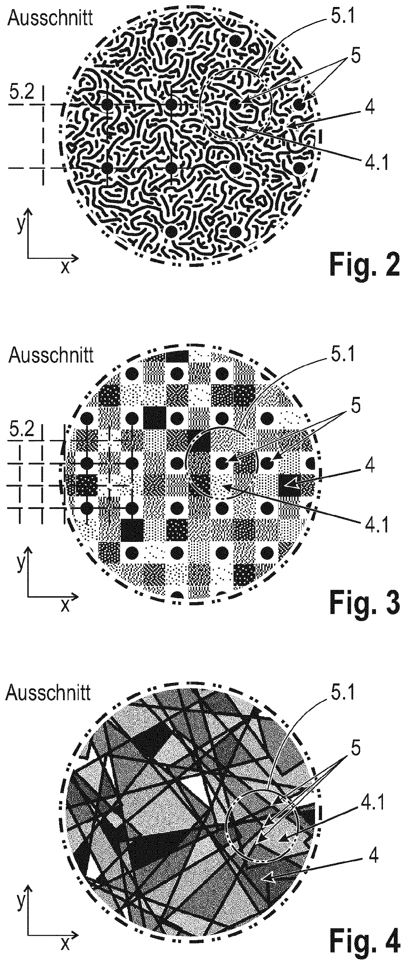

In **Fig. 1** sind die auf der Oberfläche 3 der Trägerplatte 2 angeordneten punktdefinierenden Objekte 5 und die zweidimensionale Struktur 4 durch eine vereinfachte Darstellung angedeutet. Die konkreten Ausführungen der punktdefinierenden Objekte 5 und der zweidimensionalen Strukturen 4 werden im Folgenden zu den Figuren 2 bis 4 beschrieben.

In einer in der **Fig. 2** dargestellten ersten Ausführung der Kalibriervorlage 1 ist die zweidimensionale Struktur 4 ein flächendeckendes Grauwertrauschen mit hellen und dunklen Bereichen. Das Grauwertrauschen ist in einer stark vereinfachten Schwarz-Weiß-Darstellung gezeigt, bei der ein kontinuierlicher Verlauf der Grauwerte zwischen den hellen und dunklen Bereiche nicht dargestellt ist. Das Wesentliche an der Darstellung ist, dass die zweidimensionale Struktur 4 eine flächige Anordnung der zufällig verteilten hellen und dunklen Bereiche ist.

Das punktdefinierende Objekt 5 ist als ein Kreispaar ausgeführt, bei dem einem größeren hellen Kreis ein kleinerer dunkler Kreis konzentrisch überlagert ist. Beide Kreise sind homogen gefüllt. Der helle Kreis bildet um den dunklen Kreis einen umlaufenden Rand aus, von dem sich der dunkle Kreis kontrastreich abhebt.

Das punktdefinierende Objekt 5 ist in einem orthogonalen Raster 5.2 mit einer gleichmäßigen Rasterweite in x- und y-Richtung angeordnet, wobei jede Rasterposition mit einem punktdefinierenden Objekt 5 belegt ist.

Die punktdefinierenden Objekte 5 sind der zweidimensionalen Struktur 4 überlagert. Durch die geometrisch bestimmte Form und den hellen Rand heben sich die punktdefinierenden Objekte 5 gut von der zweidimensionalen Struktur 4 ab. Dadurch können die punktdefinierenden Objekte 5 mit Mitteln der Bildverarbeitung, z. B. einer Mustersuche, sehr zuverlässig und mit hoher Positioniergenauigkeit auf der Kalibriervorlage 1 aufgefunden werden.

Durch die zufällig verteilten hellen und dunklen Bereiche der zweidimensionalen Struktur 4 ist in jeder lokalen Umgebung 5.1 der punktdefinierenden Objekte 5 ein sich unterscheidendes charakteristisches Muster 4.1 vorhanden, mit dem jedes punktdefinierende Objekt 5 der Kalibriervorlage 1 eindeutig identifiziert werden kann.

Eine zweite Ausführung der Kalibriervorlage 1 ist in der **Fig. 3** dargestellt. Die zweidimensionale Struktur 4 ist eine flächendeckende Anordnung von unmittelbar aneinander angrenzenden, gleichgroßen und unterschiedlich gefärbten Quadraten. Die Anordnung der Quadrate erfolgt im orthogonalen Raster 5.2, dessen gleichmäßige Rasterweite in x- und y-Richtung genau einer Kantenlänge der Quadrate entspricht. Die Farbe ist jeweils eine von 16 nach ihren Intensitätswerten gleichverteilten Grauwerten. Die 16 Grauwerte sind so gewählt, dass sie bei der Bildverarbeitung einen gleichen Grauwertabstand zueinander zu haben scheinen. Die 16 Grauwerte sind zufällig über die Quadrate der zweidimensionalen Struktur 4 verteilt.

Das punktdefinierende Objekt 5 ist ein dunkler Kreis auf hellem Grund, wobei der helle Grund in Form und Kantenlänge den Quadraten der zweidimensionalen Struktur 4 entspricht und der dunkle Kreis konzentrisch zum hellen Grund angeordnet ist. Ein Durchmesser des dunklen Kreises ist kleiner als die Kantenlänge der Quadrate, sodass sich der dunkle Kreis kontrastreich vom hellen Grund abhebt. Durch die geometrisch bestimmte Form und die deutlichen Kontrastunterschiede kann das punktdefinierende Objekt 5 mit Mitteln der Bildverarbeitung, z. B. einer Mustersuche sehr zuverlässig und mit hoher Positioniergenauigkeit auf der Kalibriervorlage 1 aufgefunden werden.

Das punktdefinierende Objekt 5 ist im Raster 5.2 der zweidimensionalen Struktur 4 und dieser überlagert angeordnet, wobei es in x- und y-Richtung nur jede zweite

Rasterposition belegt. Zwischen den punktdefinierenden Objekten 5 verbleibt stets eine Rasterposition für die zweidimensionale Struktur 4 frei. In der lokalen Umgebung 5.1 um eines der punktdefinierenden Objekte 5 werden deshalb genau acht unterschiedlich gefärbte Quadrate der zweidimensionalen Struktur 4 aufgefunden. Die Größe der lokalen Umgebung 5.1 ist so zu wählen, dass die acht umgebenden Quadrate vollständig in ihr enthalten sind. Durch die unterschiedlichen Grauwerte weist die lokale Umgebung 5.1 an jeder Stelle der zweidimensionalen Struktur 4 ein sich unterscheidendes charakteristisches Muster 4.1 auf. Anhand des charakteristischen Musters 4.1 ist das punktdefinierende Objekt 5 an jeder Stelle der zweidimensionalen Struktur 4 eindeutig identifizierbar.

Eine dritte Ausführung der Kalibriervorlage 1 ist in **Fig. 4** gezeigt. Die zweidimensionale Struktur 4 ist eine flächendeckende Anordnung einer Vielzahl von schwarz umrandeten Teilflächen mit jeweils unterschiedlicher Füllung in einer homogenen Farbe. Die Farben sind in einer vereinfachten Darstellung, als Grauschattierungen dargestellt. In diesem Ausführungsbeispiel werden 256 Farben aus dem RGB-Farbraum verwendet, solange diese sich in ausreichender Weise von Schwarz unterscheiden, um zwischen der schwarzen Umrandung und der farbigen Füllung einen ausreichenden Kontrast herzustellen.

Die zweidimensionale Struktur 4 ist aus einer Überlagerung einer Vielzahl von schwarz umrandeten geometrischen Figuren aus der Gruppe der Dreiecke oder Vierecke, bis hin zur Gruppe der Vielecke erzeugt. Die schwarz umrandeten geometrischen Figuren sind flächig verteilt und zufällig auf der Kalibriervorlage 1 angeordnet und haben dabei unterschiedliche Größen und Ausrichtungen. Durch die Überlagerung entstehen aus den geometrischen Figuren eine Vielzahl von kleineren Teilflächen, die ebenfalls schwarz umrandet sind. Die Teilflächen weisen alle eine homogen gefärbte Füllung auf, wobei die Füllungen benachbarter Teilflächen unterschiedlich gefärbt sind.

Als punktdefinierende Objekte 5 werden Schnittpunkte und Ecken der schwarzen Umrandungen verwendet. Die Ecken sind bereits vor der Überlagerung an den geometrischen Figuren vorhanden. Die Schnittpunkte entstehen erst bei der Überlagerung. Die Schnittpunkte und Ecken der schwarzen Umrandungen sind zufällig über die Kalibriervorlage 1 verteilt angeordnet. Durch den Kontrastunterschied zwischen den farbigen Füllungen und den Schnittpunkten und Ecken der schwarzen Umrandung können die punktdefinierenden Objekte 5 mit Mitteln der Bildverarbeitung sehr zuverlässig und mit hoher Positioniergenauigkeit aufgefunden werden.

Durch die zweidimensionale Struktur 4 ist in jeder lokalen Umgebung 5.1 der punktdefinierenden Objekte 5 ein anderes charakteristisches Muster 4.1 aus gefärbten Teilflächen vorhanden. Dadurch kann jedes punktdefinierende Objekt 5 der Kalibriervorlage 1 eindeutig identifiziert werden.

Wie in **Fig. 1** gezeigt, ist die Kalibriervorlage 1 zum geometrischen Kalibrieren des in x-y-Richtung aufgespannten Kamera-Arrays 8 mit einer Vielzahl von Kameras 8.1 in einer dem Kamera-Array 8 in z-Richtung nachgeordneten x-y-Ebene angeordnet. Die x-y-Ebene weist einen Abstand a zum Kamera Array 8 auf. Die Kameras 8.1 sind mit den entozentrischen Objektiven 8.2 auf die zweidimensionale Struktur 4 der Kalibriervorlage 1 gerichtet.

Die Kameras 8.1 weisen in einem Kamera-Koordinatensystem 11 (in **Fig. 1** beispielhaft nur für eine der Kameras 8.1 gezeigt) jeweils einen in x-y-Richtung orientierten Bilderfassungsbereich 9.1 auf. Die Bilderfassungsbereiche 9.1 jeweils benachbarter Kameras 8.1 überlappen sich teilweise und weisen miteinander eine Überschneidung 9.2 auf. Alle Bilderfassungsbereiche 9.1 der Kameras 8.1 zusammengenommen bilden einen Prüfbereich 9 des Kamera-Arrays 8. Die verfahrenstechnische Zusammenfassung der Bilderfassungsbereiche 9.1 zum Prüfbereich 9 erfolgt anhand von Transformationsvorschriften, mit denen die einzelnen Kamera-Koordinatensysteme 11 in ein globales Koordinatensystem 10 des Prüfbereichs 9 überführt werden können. Die Transformationsvorschriften werden mittels korrespondierender punktdefinierender Objekte 5 erstellt, die in den Überschneidungen 9.2 aufgefunden werden und die in den Bilderfassungsbereichen 9.1 von benachbarten Kameras 8.1 demselben Punkt zugeordnet werden können.

Die Kalibriervorlage 1 deckt mit der zweidimensionalen Struktur 4 den gesamten Prüfbereich 9 des Kamera-Arrays 8 vollständig ab. Dementsprechend sind die Außenabmessungen der Trägerplatte 2 an die Größe des Prüfbereichs 9 angepasst. Die Dicke der Trägerplatte 2 orientiert sich an der Dicke von Prüfobjekten, die üblicherweise mit dem Kamera-Array 8 erfasst und geprüft werden sollen. Die Auswahl der Dicke und des Materials der Trägerplatte 2 erfolgt letztendlich so, dass eine erforderliche Ebenheit und Stabilität der Kalibriervorlage 1 garantiert werden können.

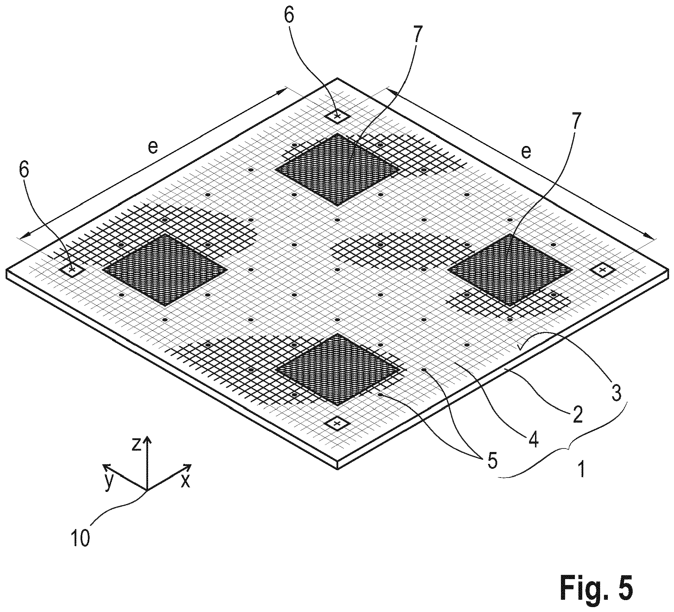

In einer weiteren, in **Fig. 5** dargestellten Ausführung der Kalibriervorlage 1 sind zusätzlich zu den zuvor beschriebenen zweidimensionalen Strukturen 4 und den punktdefinierenden Objekten 5 Abstandsmarken 6 und / oder Farbmarken 7 auf der Oberfläche 3 der Trägerplatte 2 angeordnet. Die Farbmarken 7 sind zweidimensional und überlagern die zweidimensionale Struktur 4.

Die Abstandsmarken 6 weisen ein dunkles Kreuz auf einem hellen Grund auf. Die dunklen Kreuze können dadurch mit Mitteln der Bildverarbeitung sehr zuverlässig und mit hoher Positioniergenauigkeit aufgefunden werden. Die Mittelpunkte der dunklen Kreuze mehrerer Abstandsmarken 6 sind in x- und y-Richtung in einer definierten Entfernung e zueinander angeordnet. Anhand der bekannten Entfernung e kann dem Prüfbereich 9 des Kamera-Arrays 8 in x- und y-Richtung ein definiertes Längenmaß zugeordnet werden. Mittels der Abstandsmarken 6 wird der Prüfbereich 9 des Kamera-Arrays 8 neben der geometrischen Kalibrierung auch maßlich kalibriert. Die Abstandsmarken 6 sind dazu möglichst nahe der äußeren Begrenzungen der Kalibriervorlage 1 angeordnet, sodass die Entfernung e im Prüfbereich 9 möglichst groß ist.

Die Farbmarken 7 sind mit einem definierten Grauwert homogen gefüllte Flächen. Mittels der Farbmarken 7 werden die Kameras 8.1 neben der geometrischen Kalibrierung auch auf einen homogenen Farbeindruck über den Prüfbereich 9 des Kamera-Arrays 8 kalibriert. Die Verteilung, Größe und Anzahl der Farbmarken 7 richtet sich nach der Verteilung, Größe und Anzahl der Bilderfassungsbereiche 9.1 der Kameras 8.1. Die Farbmarken 7 sind so auf der Kalibriervorlage 1 angeordnet, dass sie in den Überschneidungen 9.2 der Bilderfassungsbereiche 9.1 keine punktdefinierenden Objekte 5 verdecken und dass jede Kamera 8.1 zumindest einen größeren Teil einer der Farbmarken 7 erfassen kann.

In speziellen Ausführungen der Kalibriervorlage 1 können neben der orthogonalen Anordnung im Raster 5.2 oder der zufälligen Verteilung der punktdefinierenden Objekte 5 über die Kalibriervorlage 1 auch andere Anordnungen wie z. B. versetzte, bienenwabenartige, spiralförmige o. ä. Anordnungen verwendet werden.

Wesentlich ist, dass die punktdefinierenden Objekte 5 in ausreichender Häufigkeit auf der Kalibriervorlage 1 vorhanden sind, sodass in den Überschneidungen 9.2 stets eine ausreichende Anzahl der punktdefinierenden Objekte 5 aufgefunden werden kann, aus denen sich die Transformationsvorschriften berechnen lassen. Weiterhin muss in der lokalen Umgebung 5.1 stets ein ausreichender Teil der zweidimensionalen Struktur 4 auffindbar sein, um für jedes punktdefinierende Objekt 5 das charakteristische Muster 4.1 bereitzustellen.

Bei einem Kalibrierverfahren zum geometrischen Kalibrieren einer Vielzahl von Kameras 8.1 mit entozentrischen Objektiven 8.2, die in einem in x-y-Richtung orientierten Kamera-Array 8 angeordnet sind, werden mit Hilfe einer erfindungsgemäßen Kalibriervorlage 1 Kamera-Koordinatensysteme 11 der Kameras 8.1 in ein gemeinsames globales Koordinatensystem 10 des Kamera-Arrays 8 transformiert. Dadurch können Bilderfassungsbereiche 9.1 der einzelnen Kameras 8.1 zu einem Prüfbereich 9 des Kamera-Arrays 8 zusammengeführt werden, sodass mit dem Kamera-Array 8 ein Prüfobjekt originalgetreu erfasst werden kann.

Die Kalibriervorlage 1 ist eine Trägerplatte 2 mit einer ebenen Oberfläche 3, auf der flächig verteilt eine zweidimensionale Struktur 4 und zweidimensionale punktdefinierende Objekte 5 angeordnet sind.

Die Transformation erfolgt anhand berechneter Transformationsmatrizen, die als Vorschriften zum Zusammenführen der Kamera-Koordinatensysteme 11 in das globale Koordinatensystem 10 verwendet werden. Für die Berechnung der Transformationsmatrizen werden korrespondierende punktdefinierende Objekte 5 benötigt, die in Überschneidungen 9.2 von Bilderfassungsbereichen 9.1 jeweils benachbarter Kameras 8.1 aufgefunden werden und die in beiden Bilderfassungsbereichen 9.1 den gleichen Punkt abbilden. Die punktdefinierenden Objekte 5 werden mit der Kalibriervorlage 1 bereitgestellt.

Zum Kalibrieren der Vielzahl von Kameras 8.1 wird in einem ersten Verfahrensschritt a) die Kalibriervorlage 1 in einer dem Kamera-Array 8 in z-Richtung nachgeordneten x-y-Ebene mit einem Abstand a zum Kamera-Array 8 positioniert. Die Kalibriervorlage 1 ist mindestens so groß, dass sie den gesamten Prüfbereich 9 in allen zum Kalibrieren verwendeten Abständen a mit der zweidimensionalen Struktur 4 abdecken kann. Der Abstand a ist mindestens so groß, dass die Überschneidungen 9.2 zwischen den in der x-y-Richtung orientierten Bilderfassungsbereichen 9.1 der jeweils benachbarten Kameras 8.1 auftreten. Die Größe der Überscheidung 9.2 ist so zu wählen, dass eine ausreichende Anzahl von punktdefinierenden Objekten 5 aufgefunden werden kann.

Im Verfahrensschritt **b)** wird die Kalibriervorlage 1 mit zwei benachbarten Kameras 8.1 aufgenommen. In den Bilderfassungsbereichen 9.1 der beiden Kameras 8.1 werden alle punktdefinierenden Objekte 5 gesucht, wobei für die Suche ein übliches Mustererkennungsverfahren verwendet wird.

Im weiteren Verlauf des Verfahrens werden nur die punktdefinierenden Objekte 5 verwendet, die in den Überschneidungen 9.2 zwischen den Bilderfassungsbereichen 9.1 von benachbarten Kameras 8.1 aufgefunden werden. Im Verfahrensschritt **c)** werden deshalb die in der Überschneidung 9.2 aufgefundenen punktdefinierenden Objekte 5 extrahiert und alle anderen verworfen.

Im anschließenden Verfahrensschritt **d)** werden unter den extrahierten punktdefinierenden Objekten 5 alle korrespondierenden punktdefinierenden Objekte 5 identifiziert, die in der Überschneidung 9.2 der beiden Bilderfassungsbereiche 9.1 den gleichen Punkt abbilden. Das Identifizieren erfolgt anhand einer lokalen Umgebung 5.1 um die korrespondierenden punktdefinierenden Objekte 5, welche die punktdefinierenden Objekte 5 unmittelbar umgibt. In der lokalen Umgebung 5.1 werden Teile der zweidimensionalen Struktur 4 erfasst, die um jedes punktdefinierende Objekt 5 ein charakteristisches Muster 4.1 ausbildet. Das charakteristische Muster 4.1 ist für jedes punktdefinierende Objekt 5 der Kalibriervorlage 1 unterschiedlich, sodass dieses eindeutig identifizierbar ist.

Anhand der gefundenen korrespondierenden punktdefinierenden Objekte 5 wird im Verfahrensschritt **e)** eine Transformationsmatrix zur Nachbarschaftstransformation der Kamera-Koordinatensysteme 11 der benachbarten Kameras 8.1 berechnet und hinterlegt. Die Berechnung der Transformationsmatrix kann z. B. durch das RANSAC-Verfahren, durch das Gauß-Jordan-Verfahren oder durch andere Verfahren zum Lösen von Gleichungssystemen erfolgen.

Die Nachbarschaftstransformation muss für jedes Paar von benachbarten Kameras 8.1 erfolgen. Deshalb werden im Verfahrensschritt **f)** die Verfahrensschritte b) bis e) wiederholt, bis für alle benachbarten Kameras 8.1 Transformationsmatrizen berechnet und hinterlegt sind.

Im Verfahrensschritt **g)** wird eine der Kameras 8.1 ausgewählt, deren Kamera-Koordinatensystem 11 als ein Ursprung für das globale Koordinatensystem 10 des Kamera-Arrays 8 verwendet wird. Ausgehend von der gewählten Kamera 8.1 und deren Kamera-Koordinatensystem 11 wird eine Stapelreihenfolge festgelegt, nach der die Bilderfassungsbereiche 9.1 der einzelnen Kameras 8.1 zum Prüfbereich 9 des Kamera-Arrays 8 zusammengeführt werden.

Über die Summe aller Nachbarschaftstransformationen und die Wahl des Ursprungs kann im letzten Verfahrensschritt **h)** ein Bündelausgleich aller Transformationen erfolgen. Dadurch wird jedem Kamera-Koordinatensystem 11 genau eine Transformation in das globale Koordinatensystem 10 zugewiesen.

In einer Ausführung des Kalibrierverfahrens wird die x- und y-Ausdehnung des Prüfbereichs 9 des Kamera-Arrays 8 auf ein Längenmaß kalibriert. Dazu werden Abstandsmarken 6 vermessen, die auf der Kalibriervorlage 1 angeordnet sind. Die Abstandsmarken 6 weisen in x- und y-Richtung eine bekannte Entfernung e zueinander auf. Anhand der bekannten Entfernung e kann dem Prüfbereich 9 das Längenmaß zugeordnet werden.

In einer weiteren Ausführung des Kalibrierverfahrens wird der Prüfbereich 9 des Kamera-Arrays 8 auf einen homogenen Farbeindruck kalibriert. Dazu werden mit jeder Kamera 8.1 Farbmarken 7 erfasst, die auf der Kalibriervorlage 1 angeordnet sind. Die Farbmarken 7 weisen einen homogenen und definierten Grauwert auf, anhand dessen ein Farbabgleich zwischen den einzelnen Kameras 8.1 erfolgen kann.

In einer speziellen Ausführung des Kalibrierverfahrens erfolgt die Kalibrierung des Kamera-Arrays 8 in mehreren x-y-Ebenen. Die x-y-Ebenen weisen in z-Richtung jeweils unterschiedliche Abstände a zum Kamera-Array 8 auf. Dazu wird die Kalibriervorlage 1 nacheinander in jeder gewünschten x-y-Ebenen positioniert. In jeder der x-y-Ebenen werden dann die Verfahrensschritte durchlaufen. Für jede der x-y-Ebenen wird dadurch eine Transformationsmatrix erzeugt, sodass das Verfahren auch für Prüfkörper verwendet werden kann, die nicht eben sind und in z-Richtung eine gewisse Ausdehnung aufweisen.

### Bezugszeichenliste

- 1: Kalibriervorlage
- 2: Trägerplatte
- 3: Oberfläche
- 4: zweidimensionale Struktur
- 4.1: charakteristisches Muster
- 5: punktdefinierendes Objekt
- 5.1: lokale Umgebung
- 5.2: Raster
- 6: Abstandsmarke
- 7: Farbmarke
- 8: Kamera-Array
- 8.1: Kamera
- 8.2: Objektiv
- 9: Prüfbereich (des Kamera-Arrays 8)
- 9.1: Bilderfassungsbereich (der Kamera 8.1)
- 9.2: Überschneidung
- 10: globales Koordinatensystem
- 11: Kamera-Koordinatensystem
- a: Abstand (zwischen Kamera-Array 8 und Kalibriervorlage 1)
- e: Entfernung (zwischen zwei Abstandsmarken 6)

## Patentansprüche

1. Kalibriervorlage (1) zum geometrischen Kalibrieren einer Vielzahl von Kameras (8.1) , wobei die Kameras (8.1) mit entozentrischen Objektiven (8.2) versehen sind, enthaltend eine Trägerplatte (2) mit einer ebenen Oberfläche (3), auf der eine zweidimensionale Struktur (4) und punktdefinierende Objekte (5) angeordnet sind, wobei die punktdefinierenden Objekte (5) zufällig über die Oberfläche (3) verteilt angeordnet sind und jedes der punktdefinierenden Objekte (5) eine lokale Umgebung (5.1) aufweist, in der die zweidimensionale Struktur (4) ein charakteristisches Muster (4.1) aufweist, wobei das charakteristische Muster (4.1) für jedes punktdefinierende Objekt (5) unterschiedlich ausgeführt ist.

2. Kalibriervorlage (1) nach Anspruch 1, **dadurch gekennzeichnet, dass** die punktdefinierenden Objekte (5) in einem Raster (5.2) über die Oberfläche (3) verteilt angeordnet sind.

3. Kalibriervorlage (1) nach Anspruch 1, **dadurch gekennzeichnet, dass** die lokale Umgebung (5.1) symmetrisch um das punktdefinierende Objekt (5) angeordnet ist.

4. Kalibriervorlage (1) nach Anspruch 1, **dadurch gekennzeichnet, dass** die zweidimensionale Struktur (4) ein Grauwertrauschen ist.

5. Kalibriervorlage (1) nach Anspruch 1, **dadurch gekennzeichnet, dass** die zweidimensionale Struktur (4) eine Anordnung unterschiedlich gefärbter Quadrate ist.

6. Kalibriervorlage (1) nach Anspruch 1, **dadurch gekennzeichnet, dass** die zweidimensionale Struktur (4) eine Anordnung aus einer Vielzahl von schwarz umrandeten und unterschiedlich gefärbten Teilflächen ist.

7. Kalibrierverfahren zum geometrischen Kalibrieren einer Vielzahl von Kameras (8.1) mit entozentrischen Objektiven (8.2) mittels einer Kalibriervorlage (1) nach einem der Ansprüche 1 bis 6, mit den Verfahrensschritten:
a) Positionieren der Kalibriervorlage (1) in einer der Vielzahl von Kameras (8.1) in z-Richtung nachgeordneten x-y-Ebene mit einem Abstand (a),
b) Auffinden von punktdefinierenden Objekten (5) in Bilderfassungsbereichen (9.1) zweier benachbarter Kameras (8.1),
c) Extrahieren von punktdefinierenden Objekten (5), die in Überschneidungen (9.2) der Bilderfassungsbereiche (9.1) aufgefunden werden,
d) Identifizieren von korrespondierenden punktdefinierenden Objekten (5), die in den Überschneidungen (9.2) den gleichen Punkt abbilden,
e) Berechnen und Hinterlegen einer Transformationsmatrix zum Transformieren von Kamera-Koordinatensystemen (11) der benachbarten Kameras (8.1) anhand der korrespondierenden punktdefinierenden Objekte (5),
f) Wiederholen der Verfahrensschritte b) bis e), bis für alle benachbarten Kameras (8.1) Transformationsmatrizen berechnet und hinterlegt sind,
g) Festlegen eines Ursprungs für eine Stapelreihenfolge beim Zusammenfassen der Bilderfassungsbereiche (9.1) der Vielzahl der Kameras (8.1) zu einem Prüfbereich (9) und für ein globales Koordinatensystem (10) durch Auswählen einer Kamera (8.1) und deren Kamera-Koordinatensystems (11) und
h) Transformieren der Kamera-Koordinatensysteme (11) in das globale Koordinatensystem (10) entsprechend der Stapelreihenfolge, ausgehend vom Ursprung.

8. Kalibrierverfahren zum geometrischen Kalibrieren nach Anspruch 7, **dadurch gekennzeichnet, dass** die Kameras (8.1) in einem Kamera-Array (8) positioniert werden.

9. Kalibrierverfahren zum geometrischen Kalibrieren nach Anspruch 7, **dadurch gekennzeichnet, dass** in einem weiteren Verfahrensschritt eine x- und y-Ausdehnung im Prüfbereich (9) des Kamera-Arrays (8) kalibrierbar ist.

10. Kalibrierverfahren zum geometrischen Kalibrieren nach Anspruch 7, **dadurch gekennzeichnet, dass** in einem weiteren Verfahrensschritt ein Farbeindruck im Prüfbereich (9) des Kamera-Arrays (8) kalibrierbar ist.

11. Kalibrierverfahren zum geometrischen Kalibrieren nach Anspruch 7, **dadurch gekennzeichnet, dass** die Kalibrierung unter Wiederholung der Verfahrensschritte a) bis h) in mehreren x-y-Ebenen mit jeweils anderen Abständen (a) erfolgt.
